# EUROPEAN PATENT SPECIFICATION

(11) **EP 2 892 360 B1**
(45) Date of publication and mention of the grant of the patent: **15.06.2016**
(21) Application number: 13759444.6
(22) Date of filing: 04.09.2013
(51) Int. Cl.: A23D 7/005, A23D 7/02

(54) **EDIBLE WATER-IN-OIL EMULSION CONTAINING CHOCOLATE NUGGETS**
ESSBARE WASSER-IN-ÖL-EMULSION MIT SCHOKOLADESTÜCKEN
EMULSION D'EAU DANS L'HUILE COMESTIBLE CONTENANT DES PÉPITES DE CHOCOLAT

(30) Priority: 04.09.2012 FR 1202365
(43) Date of publication of application: 15.07.2015
(73) Proprietor: St. Hubert, 94150 Rungis (FR)
(72) Inventor: BARRET, David, F-54110 Rosières-aux-Salines (FR); MARCHAL, Norbert, F-54122 Flin (FR); LE GALL, Yanick, F-92400 Courbevoie (FR); RENAULT, Anne, F-75011 Paris (FR)
(74) Representative: Barbot, Willy
(86) International application number: PCT/EP2013/002662
(87) International publication number: WO 2014/037107

(56) References cited:
- EP-A1- 1 759 591
- US-A1- 2005 129 833
- US-A1- 2006 093 727

## Description

This patent application claims the priority of the application FR 12/02365 filed on 4 September 2012; which is incorporated herein by reference in full.

### Field of the Invention

This invention relates to the field of edible emulsions. More particularly, the present invention relates to spreadable fats.

### Technical background of the invention

Breakfast is surely the most important meal of the day. It varies according to the regions of the globe where it can be more or less hearty, mainly salty or sweet. Two major types of breakfast can be distinguished at the moment: the continental breakfast, rather sweet, and the Anglo-Saxon breakfast, heartier and rather salty. The ideal continental breakfast should consist of a beverage, cereals and fruit. Cereals are often provided by bread, eaten in the form of toasts, on which butter, honey, jam or still industrial spreads can be added. The continental breakfast thus composed provides proteins, carbohydrates and vitamins. It should provide for a quarter of the daily carbohydrate caloric contribution and comparable amounts of slow as well as fast-acting sugars.

However, often through lack of interest when getting up or through lack of time, breakfast is sometimes skipped or it consists of industrial foodstuffs such as cereals as well as spreads containing too many fatty acids and fast-acting sugars, and are hence quite caloric without being as filling. Thus, after fasting some ten hours during the night, and before lunch, which may take place up to 6 hours later, breakfast should be balanced and nourishing so as to preserve the mental performances throughout the morning and to prevent discomforts associated with hypoglycemia and nibbling.

There is hence a need for a spreadable emulsion which is both suitable for the body's needs during breakfast, i.e. neither too fatty nor too sweet, and which benefits from sufficient organoleptic qualities to make people feel like having breakfast.

Spreadable water-in-oil emulsions, such as for instance margarine, are well-known and frequently used food products which consist of a continuous fat phase and a dispersed aqueous phase. The fat phase includes liquid fats and structure fats. Liquid fats are liquid at room temperature, whereas structure fat is solid at room temperature and serves for structuring the fat phase and stabilising the emulsion.

However, when other elements are added to the emulsion, in particular sweet elements, there will be water transfers, associated with the osmosis phenomenon, between these sweet inclusions and the emulsion, whose consequence will be to destabilise the structure of the emulsion and to modify the organoleptic properties and the structure thereof.

There is also a need for a spreadable water-in-oil emulsion which may contain sweet inclusions without detriment to the quality of the emulsion, its structure, its organoleptic properties and its preservation.

### Summary of the Invention

One or several of the needs previously mentioned are addressed by the edible water-in-oil emulsion of the present invention having:
i) a fat content ranging between 15 and 95% and
ii) a chocolate inclusion content ranging between 5 and 50%, which chocolate inclusions have a size ranging between 1 and 8 mm, and are distributed preferentially homogeneously throughout the emulsion.

Astonishingly, by modifying some features of the emulsion and/or inclusions, the inventors have shown that it was possible to obtain an edible water-in-oil emulsion containing sweet inclusions. This emulsion has a long-term structural stability comparable to water-in-oil emulsions which do not contain any sweet inclusions, and also benefits from excellent organoleptic qualities.

The present invention is also directed to a method of preparing such an emulsion.

### Detailed description of the invention

A first object of the invention provides an edible water-in-oil emulsion comprising:
i) a fat content ranging between 15 and 95% and
ii) a chocolate inclusion content ranging between 5 and 50%, which chocolate inclusions have a size ranging between 1 and 8 mm, and are distributed preferentially homogeneously throughout the emulsion.

The inventors have shown that with this size of chocolate inclusions, the emulsion does not exhibit a nauseating taste, that the chocolate flavour is pronounced and that the crispness of the chocolate inclusions is adapted to the emulsion.

By "chocolate inclusions" are meant, in the sense of the present invention, pieces of chocolate integrated to the edible water-in-oil emulsion of the invention. These chocolate inclusions can be in the form of nuggets, shavings, drops, chunks, chips or any other form that the man of the art deems appropriate.

By "homogeneous distribution" is meant that the chocolate inclusions are evenly dispersed (whereas this even distribution can be assessed by naked eye) in the emulsion.

According to a preferred embodiment, the emulsion according to the invention contains fat of plant origin or of animal origin, preferably the fat is of plant origin.

The fat may be a single fat or a combination of fats.

According to another preferred embodiment, the emulsion according to the invention includes a combination of fats, preferably fat of animal origin (for example butter) and fat of plant origin.

The fat and the fat blend may include animal fats and/or vegetable fats and/or dairy fats which may be hydrogenated, interesterified or fractioned. Suitable animal fats include butter. The suitable vegetal fats may be selected among the group comprising sunflower oil, soya oil, palm kernel oil, palm oil, coconut oil, rapeseed oil, corn oil, coconut butter or their fractions, or combinations thereof. The blends of interesterified fats of these fats or optionally with other fats, are also include in this invention.

According to a preferred embodiment, the emulsion according to the invention has a fat content between 20 and 85%, preferably between 30 and 70% and most preferably between 30 and 55%. The emulsion according to the invention, used for the production of chocolate spread, thus provides a "spreadable fat" (rule (EC) n°2991/94).

By "spreadable fat" is meant a blend of dairy fats, of animal and/or vegetable fats and water. For instance, such spreadable fats may be butter and margarine. The spreadable fats are mainly consumed raw, contrary to baking fats which are baked.

In a preferred embodiment, the emulsion according to the invention has a content of chocolate inclusions between 10 and 40%, preferably between 15 and 30% and still more preferably, the chocolate inclusion content ranges between 15 and 25%.

In a preferred embodiment, the emulsion according to the invention includes chocolate inclusions whose size ranges between 1 and 7 mm, preferably between 2 and 5 mm.

In a preferred embodiment, the emulsion according to the invention has a stable structure at 4°C for more than a week, preferably more than two weeks, and most preferably more than four weeks, which stability is obtained by limiting the water transfer between the water-in-oil emulsion and the inclusions by:
a) The use of chocolate inclusions with a sugar content smaller than or equal to 40%, preferably smaller than or equal to 30%, preferably still 25% and most preferably 20, 15 possibly still 10 and/or 2%;
b) The introduction of sugar into the water-in-oil emulsion, apart from chocolate inclusions, to a content less than or equal to 20% of the water-in-oil emulsion, preferably ranging between 1 and 15% and most preferably between 5 and 10%;
c) The use of chocolate inclusions associated with a coating, preferably a lipid coating, preferably the lipid coating consists of coconut butter, gelatin, beeswax, shellac resin (E904) and palm oil;
d) The introduction of gas, preferably air or nitrogen, into the fat phase or into the water-in-oil emulsion;
e) The introduction of at least one gelling agent or thickener, such as hydrocolloids (starches, guar, xanthan, carrageenans, etc.) and/or gelatin, which has a content of less than or equal to 15% of the water-in-oil emulsion, preferably 8% and most preferably 5%; and/or
f) The introduction of at least one emulsifier, which allows obtaining a more structured emulsion and may be selected among, for instance, lecithin, monoglycerides, diglycerides and polyricinoleate polyglycerol.

By "sugar" is meant any "ose" such glucose, fructose, maltose or still saccharose.

By "stable structure" is meant, in the sense of the present invention, a structure that is free from, or in proportions which do not modify the organoleptic properties, destabilisation phenomena such as creaming, phase-shift, sedimentation, flocculation and coalescence.

The emulsion of the invention maintains solid consistency at 20°C

In a preferred embodiment, the fat of the emulsion according to the invention includes polyunsaturated fatty acids, preferably omega-3s.

The preferred emulsions include polyunsaturated fatty acids (PUFAs). The preferred PUFAs are omega-3s and omega-6s such as alpha linoleic acid (ALA), docosahexaenoic acid (DHA) and eicosapentaenoic acid (EPA). The fats in the fat phase are preferably vegetable fats. Preferably, the fat phase includes at least 25% vegetable fat.

The step c) of chocolate inclusion coating may be realised by techniques, well known to the man of the art, and including for instance spraying and centrifugation.

The emulsion thus applied to chocolate inclusions acts as a water barrier, preventing the uptake of humidity with the time of the chocolate inclusion and the destabilisation of the emulsion.

The step d) of introducing gas into the water-in-oil emulsion of the invention can be carried out by techniques well-known to the man of the art such as swelling in particular.

By gelling agent or thickener is meant an agent capable of disturbing the mobility of the water inside the composition according to the invention, possibly of fixing it.

Another object of the invention concerns a method of preparing an emulsion according to the invention, comprising the steps of:
a) hot preparation of the fat phase,
b) preparation of the aqueous phase,
c) slow addition of the aqueous phase in the fat phase under strong agitation to create the emulsion,
d) pasteurisation of the emulsion obtained at step c),
e) pre-cooling of the emulsion,
f) crystallisation of the emulsion
g) addition and dispersion of the chocolate inclusions in the emulsion,
h) packaging.

The step a) of hot preparation of the fat phase is carried out by techniques well-known to the man of the art. The preparation temperature ranges between 55 and 75°C. Agitation is preferably carried by a paddle mixer.

The step b) of preparation of the aqueous phase is carried out by techniques well-known to the man of the art. The preparation temperature ranges between 40 and 65°C. Agitation is preferably carried by a paddle mixer.

The step c) of dispersion of the aqueous phase in the fat phase is carried out by techniques well-known to the man of the art. Agitation is preferably carried out by a paddle agitator, a turbine agitator, recirculation caused by a centrifugal pump, a rotor/stator type agitator or a homogeniser.

The step d) of pasteurisation is carried out by techniques well-known to the man of the art. Preferably, pasteurisation is conducted at temperature higher than 70°C (for instance 86°C) for a few seconds.

The step e) of pre-cooling of the emulsion is carried out by techniques well-known to the man of the art. Preferably, this step is carried out to obtain a product upon completion of this step at a lower temperature than 50°C, preferably lower than 40°C

The step f) of crystallisation of the emulsion is carried out by techniques well-known to the man of the art. Preferably, it is carried out by passing the emulsion successively through heat exchangers with scraped surfaces. Preferably, the output temperature of the emulsion ranges between 5 and 20°C, preferably between 10 and 15°C.

Moreover, the emulsion of the invention includes an emulsifier. The emulsifier is preferably an emulsifier for water-in-oil emulsions, still more preferably, selected in the group comprising distilled monoglycerides, citric acid esters of monoglycerides, diacetyl acetic esters of monoglycerides, lactic acid esters of monoglycerides, mono- and diglycerides, polyglycerol esters of fatty acids, sorbitan esters of fatty acids or lecithin.

The pH of the aqueous phase can be set at the desired value, among other things to influence the impression of acid or basic taste and to influence the microbial stability. Preferably, the pH of the aqueous phase in the emulsion of the invention ranges between 4.60 and 5.60.

Optionally, proteins can be added to the emulsion of the invention. Proteins can be added to improve the taste, the flavour and the nutritional value of the emulsion.

Optionally still, the edible emulsion of the invention contains other ingredients such as preservatives, vitamins, aromas, colouring agents such as beta-carotene or still antioxidants.

The following examples are provided by way of illustration and are not intended to limit the scope of the present invention.

### Examples

### 1/ Comparative study of two spreadable water-in-oil chocolate emulsions.

| | **« All chocolate » concept** | **« Chocolate nuggets» concept** |
|---|---|---|
| **Aspect** | Ice-cream aspect | Real aspect of the emulsion butter Appearance of shavings or inclusion chips |
| **Texture** | Very hard | Creamy emulsion Crispy chocolate inclusions |
| **Taste** | Nauseating, heavy, fat Or too light according to the formulations | Not nauseating, not too sweet Quite pronounced chocolate flavour |

### Conclusion:

Only the spreadable emulsion containing chocolate inclusions, in the form of nuggets in particular, with respect to the all-chocolate spreadable emulsion, exhibits attractive and especially satisfactory organoleptic properties, suitable for breakfast. The aspect, the texture and the taste of the spreadable emulsion with chocolate nuggets are better suited to breakfast and the consumer's expectations.

### 2/ Example of composition of the spreadable emulsion with chocolate « nuggets »

| Ingredients | % of finished product |
|---|---|
| Butter + concrete vegetable fat | 33.00 |
| Fluid vegetable fat | 23.00 |
| Emulsifiers | 0.70 |
| Colouring agent | 0.01 |
| Aroma | 0.05 |
| Total fat phase | 56.76 |
| Water | 41.44 |
| Food salt | 0.50 |
| Milk powder | 1.00 |
| Aroma | 0.10 |
| Preservative | 0.10 |
| Acidity corrector | 0.10 |
| Total aqueous phase | 43.24 |

| | |
|---|---|
| Chocolate inclusions: 25% in mass of the finished product | |

## Claims

1. Edible water-in-oil emulsion comprising:
a. a fat content ranging between 15 and 95% and
b. a chocolate inclusion content ranging between 5 and 50%, which chocolate inclusions have a size ranging between 1 and 8 mm, and are distributed preferentially homogeneously throughout the emulsion.

2. Emulsion according to claim 1, in which the fat is of plant origin or animal origin, preferably the fat is of plant origin.

3. Emulsion according to claim 1, which includes a combination of fats, preferably at least one fat of animal origin and at least one fat of plant origin.

4. Emulsion according to any one of claims 1 to 3, in which the fat content ranges between 20 and 85%, preferably between 30 and 70%.

5. Emulsion according to any one of claims 1 to 4, in which the chocolate inclusion content ranges between 10 and 40%, preferably between 15 and 30% and still more preferably, the chocolate inclusion content ranges between 15 and 25%.

6. Emulsion according to any one of claims 1 to 5, in which the size of the chocolate inclusion content ranges between 1 and 7 in diameter.

7. Emulsion according to any one of claims 1 to 6, which emulsion has a stable structure at 4°C for more than a week, which stability is obtained by limiting the water transfer between the water-in-oil emulsion and the inclusions by:
a) the use of chocolate inclusions with a sugar content less than or equal to 40%; and/or
b) the introduction of sugar into the water-in-oil emulsion, apart from chocolate inclusions, has a content less than or equal to 15% of the water-in-oil emulsion; and/or
c) the use of chocolate inclusions associated with a coating, preferably a lipid coating; and/or
d) the introduction of gas, preferably air or nitrogen, into the fat phase or into the water-in-oil emulsion;
e) the introduction of at least one gelling agent or thickener with a content of less than or equal to 15% of the water-in-oil emulsion; and/or
f) the introduction of at least one emulsifier.

8. Emulsion according to any one of claims 1 to 7, in which the fat comprises polyunsaturated fatty acids.

9. Method of preparing an emulsion according to any of the claims 1 to 8, comprising the following steps:
a) hot preparation of the fat phase,
b) preparation of the aqueous phase,
c) slow addition of the aqueous phase in the fat phase under strong agitation to create the emulsion,
d) pasteurisation of the emulsion obtained at step c),
e) pre-cooling of the emulsion,
f) crystallisation of the emulsion,
g) addition and dispersion of the chocolate inclusions in the emulsion, and
h) packaging.

## Patentansprüche

1. Essbare Wasser-in-Öl-Emulsion, umfassend:
a. einen Fett-Anteil zwischen 15 und 95% und
b. einen Schokoladeneinschlussanteil zwischen 5 und 50%, wobei die Schokoladeneinschlüsse eine Größe aufweisen, die zwischen 1 und 8 mm liegt, und vorzugsweise homogen in der Emulsion verteilt sind.

2. Emulsion nach Patentanspruch 1, in der das Fett pflanzlichen oder tierischen Ursprungs ist; vorzugsweise ist das Fett pflanzlichen Ursprungs.

3. Emulsion nach Patentanspruch 1, die ein Gemisch von Fetten enthält, vorzugsweise mindestens ein Fett tierischen Ursprungs und mindestens ein Fett pflanzlichen Ursprungs.

4. Emulsion nach irgendeinem der Patentansprüche 1 bis 3, in der der Fettanteil zwischen 20 und 85% beträgt, vorzugsweise zwischen 30 und 70%.

5. Emulsion nach irgendeinem der Patentansprüche 1 bis 4, in der der Schokoladeneinschlussanteil zwischen 10 und 40% beträgt, vorzugsweise zwischen 15 und 30% und noch stärker bevorzugt liegt der Schokoladeneinschlussanteil zwischen 15 und 25%.

6. Emulsion nach irgendeinem der Patentansprüche 1 bis 5, in der die Größe des Schokoladeneinschlussanteils zwischen 1 und 7 im Durchmesser beträgt.

7. Emulsion nach irgendeinem der Patentansprüche 1 bis 6, wobei die Emulsion bei 4°C für mehr als eine Woche eine stabile Struktur aufweist, wobei die Stabilität durch Begrenzung des Wasserübertrittes zwischen der Wasser-in-Öl-Emulsion und den Einschlüssen erzielt wird, durch:
a) die Verwendung von Schokoladeneinschlüssen mit einem Zuckergehalt kleiner oder gleich 40%, und/oder
b) einen Zusatz von Zucker zur Wasser-in-Öl-Emulsion außer den Schokoladeneinschlüssen in einem Anteil von weniger oder gleich 15% der Wasser-in-Öl-Emulsion, und/oder
c) die Verwendung von Schokoladeneinschlüssen in Verbindung mit einem Überzug, vorzugsweise einem Lipidüberzug, und/oder
d) die Einleitung von Gas, vorzugsweise Luft oder Stickstoff, in die Fettphase oder in die Wasser-in-Öl-Emulsion,
e) den Zusatz mindestens eines Geliermittels oder Andickungsmittels in einem Anteil von weniger als oder gleich 15% der Wasser-in-Öl-Emulsion, und/oder
f) den Zusatz mindestens eines Emulgators.

8. Emulsion nach irgendeinem der Patentansprüche 1 bis 7, in der das Fett mehrfach ungesättigte Fettsäuren umfasst.

9. Verfahren zur Herstellung einer Emulsion nach irgendeinem der Patentansprüche 1 bis 8, folgende Schritte umfassend:
a) heiße Zubereitung der Fettphase,
b) Zubereitung der wässrigen Phase,
c) langsamer Zusatz der wässrigen Phase zur Fettphase unter starkem Rühren, um eine Emulsion zu erzielen,
d) Pasteurisieren der in Schritt c) erhaltenen Emulsion,
e) Vorkühlen der Emulsion,
f) Auskristallisieren der Emulsion,
g) Zusatz zur und Verteilen der Schokoladeneinschlüsse in der Emulsion, und
h) Verpackung.

## Revendications

1. Emulsion eau dans huile comestible comprenant :
a) une teneur en matière grasse comprise entre 15 et 95% et
b) une teneur en inclusions de chocolat comprise entre 5 et 50%, lesquelles inclusions de chocolat présentent une taille comprise entre 1 et 8 mm, et sont réparties de préférence de manière homogène dans toute l'émulsion.

2. Emulsion selon la revendication 1, dans laquelle la matière grasse est d'origine végétale ou d'origine animale, de préférence la matière grasse est d'origine végétale.

3. Emulsion selon la revendication 1, laquelle inclut une combinaison de matières grasses, de préférence au moins une matière grasse d'origine végétale et au moins une matière grasse est d'origine végétale.

4. Emulsion selon l'une quelconque des revendications 1 à 3, dans laquelle la teneur de matière grasse est comprise entre 20 et 85%, de préférence entre 30 et 70%.

5. Emulsion selon l'une quelconque des revendications 1 à 4, dans laquelle la teneur en inclusions de chocolat est comprise entre 10 et 40%, de préférence entre 15 et 30% et de manière encore préférée, la teneur en inclusions de chocolat est comprise entre 15 et 25%.

6. Emulsion selon l'une quelconque des revendications 1 à 5, dans laquelle la taille des inclusions de chocolat est comprise entre 1 et 7 mm de diamètre.

7. Emulsion selon l'une quelconque des revendications 1 à 6, laquelle émulsion présente une structure stable à 4°C pendant plus d'une semaine, laquelle stabilité est obtenue en limitant le transfert d'eau entre l'émulsion eau dans huile et les inclusions par :
a) L'utilisation d'inclusions de chocolat ayant une teneur en sucre inférieure ou égale à 40% ; et/ou
b) L'introduction de sucre dans l'émulsion eau dans huile, en dehors des inclusions de chocolat, à une teneur inférieure ou égale à 15% de l'émulsion eau dans huile ; et/ou
c) l'utilisation d'inclusions de chocolat associées à un enrobage, de préférence un enrobage lipidique ; et/ou
d) l'introduction de gaz, de préférence de l'air ou de l'azote, dans la phase grasse ou dans l'émulsion eau dans huile ;
e) l'introduction d'au moins un agent gélifiant ou épaississant à une teneur inférieure ou égale à 15% de l'émulsion eau dans huile ; et/ou
f) l'introduction d'au moins un émulsifiant.

8. Emulsion selon l'une quelconque des revendications 1 à 7, dans laquelle la matière grasse comprend des acides gras polyinsaturés.

9. Procédé de préparation d'une émulsion selon l'une quelconque des revendications 1 à 8, comprenant les étapes de :
a) préparation de la phase grasse à chaud,
b) préparation de la phase aqueuse,
c) addition lente de la phase aqueuse dans la phase grasse sous agitation forte pour créer l'émulsion,
d) pasteurisation de l'émulsion obtenue à l'étape c),
e) pré-refroidissement de l'émulsion,
f) cristallisation de l'émulsion,
g) Ajout et dispersion des inclusions de chocolat dans l'émulsion, et
h) Conditionnement.
